# EUROPEAN PATENT APPLICATION

(11) **EP 4 303 464 A1**
(43) Date of publication of application: **10.01.2024**
(21) Application number: 22183957.4
(22) Date of filing: 08.07.2022
(51) Int. Cl.: F16F 9/04, F16F 9/58

(54) **BUMPER ELEMENT FOR AN AIR SPRING AND AIR SPRING**

(71) Applicant: ContiTech Luftfedersysteme GmbH, 30165 Hannover (DE)
(72) Inventor: Márton, Márton, 30165 Hannover (DE); Reinecke, Hans-Jörg, 30165 Hannover (DE)
(74) Representative: Continental Corporation

(57) **Abstract**

The present invention relates to a bumper element (10) for an air spring (20), in particular for a trailer air spring. The bumper element (10) is mountable to an end plate (21) of the air spring (20), in particular to a lower end plate (21) of the air spring (20). The bumper element (10) comprises a cushion member (1), in particular a rubber cushion member (1), and the cushion member (1) comprises a friction reduction layer (2).

## Description

The present invention relates to a bumper element according to claim 1 and an air spring according to claim 10.

Air springs are used in various suspension applications, such as passenger cars, buses, trucks and trailers. The air is typically enclosed in a rolling bellows, which is connected in an airtight manner to an upper end plate and a lower end plate, e.g. a cover and a rolling piston. The air spring is typically supplied with compressed air by a compressor. Depending on the load on the air spring, air is pumped in or out to keep the filling volume constant. Some air springs, in particular air springs for trailers, may include bumper elements inside the volume of the bellows. Usually, these bumper elements are intended to protect the suspension parts from damage, as they serve as a cushion when the air spring fails or when the air spring is depressurized.

It has been recognized that especially trailer air springs tend to be destroyed under certain conditions. In particular, during harbor operations, where a truck uncouples its trailer and pushes the trailer onto the ship, are identified as highly problematic. The trailer's air springs are no longer supplied with compressed air, as truck and trailer are uncoupled. This may cause an upper end plate of the air spring to come into contact with the bumper element. Since the bumper element is usually made of rubber and the upper end plate is usually made of metal, there is a high level of friction between these components. This leads to the upper end plate of the air suspension exerting high forces on the bumper element, which leads to a critical deformation of the bumper element due to high axial and at the same time lateral forces as well acting thereon. This can be further affected for example by poor road conditions. In the end, this can lead to the bumper element to be destroyed so that the bumper element or the whole air spring needs to be replaced.

In view of the foregoing, the objective of the present invention is to provide a bumper element or an air spring that makes it possible to withstand these high forces in a simple manner in order to extend the lifetime of the bumper element or the air spring.

The objective of the invention is solved by a bumper element comprising the features of claim 1 and by an air spring according to the features of claim 10.

Further advantageous embodiments result from the dependent claims.

In particular, the objective of the invention is solved by a bumper element for an air spring, in particular for a trailer air spring. The bumper element is mountable to an end plate of the air spring, in particular to a lower end plate of the air spring. The bumper element comprises a cushion member, in particular a rubber cushion member. The cushion member comprises a friction reduction layer.

An important idea of the invention is to increase the lifetime of the cushion member by reducing lateral forces acting thereon. In the context of the present invention, this is achieved by reducing the friction of the surface of the cushion member. For this purpose, a friction reduction layer is provided on the surface of the cushion member. If, for example, an upper end plate of an air spring comes into contact with this area, e.g., because of a depressurized or not correct working air spring, the lateral forces acting on the cushion member are drastically reduced, as the friction between the upper end plate and the cushion member is decreased by the friction reduction layer.

In other words, the bumper element of the present invention fulfills two functions. On the one hand, it dampens movement of the upper end plate along a suspension path of the air spring by means of the cushion member when the air spring is depressurized. On the other hand, the friction reduction layer prevents sticking between the upper end plate and the bumper element when the air spring is depressurized and the upper end plate may come into contact with the bumper element. In this way, when the upper end plate comes into contact with the bumper element, the upper end plate may smoothly slide laterally on the bumper element, so that no large lateral forces, which could result from the movement of the upper end plate, act on the bumper element. As a result, the bumper element is only minimally deformed laterally and cannot be destroyed by a movement of the upper end plate.

In a preferred embodiment, the friction reduction layer is arranged on a top portion of the cushion member, in particular such that when the bumper element is mounted to the air spring, the top portion faces an upper end plate of the air spring.

In this way, the friction between an upper end plate of the air spring and the bumper element is drastically reduced, in case the upper end plate comes into contact with the bumper element. Thus, shearing forces on the bumper element caused by a movement of the upper end plate are reduced. This avoids serious damage of the bumper element in order to enhance the lifetime of the bumper element and/or the air spring, which comprises the bumper element with the friction reduction layer. It is preferred to provide only the area where critical forces occur with the friction reduction layer only - i.e. on the top portion of the cushion member. Providing the layer only on the upper side saves material (since only the upper side instead of the full surface has to be provided with the layer) and thus manufacturing costs are reduced (compared to cover the full surface of the cushion member with a friction reduction layer). This is especially important for manufactures, as the corresponding materials having good friction-reducing properties (like polytetrafluoroethylene) are rather expensive.

In a preferred embodiment, the friction reduction layer comprises (or consists of) polytetrafluoroethylene.

Polytetrafluoroethylene (also known as, e.g., PTFE or Teflon) has excellent friction reduction properties in order to reduce friction between the upper end plate of the air spring, which is typically made of metal, and the cushion member (consisting of rubber). Polytetrafluoroethylene has one of the lowest coefficients of friction of any solid. With a polytetrafluoroethylene layer on the cushion member, tested bumper elements had the highest resistance to the damage thresholds.

In a preferred embodiment, the friction reduction layer has a thickness between 1 mm and 20 mm, preferably between 5 mm and 10 mm.

With a comparatively thin friction reduction layer a trade-off is made between mechanical stability and manufacturing costs. Especially polytetrafluoroethylene is a comparatively expensive material. Good friction reduction properties could be shown for friction reduction layers between 1 mm and 20 mm.

In a preferred embodiment, the connection between the friction reduction layer and the cushion member is realized or supported by means of a support element. A mounted connection was preferred between the friction reduction layer and the support element.

By means of the support element the mechanical properties of the connection between the material of the friction reduction layer and the material of the cushion member is optimized. In addition, the extension of the material of the friction conduction layer and/or the cushion member can be controlled during the work loads.

In a preferred embodiment, the support element is vulcanized to the cushion member, preferably by means of a bonding agent coating.

Due to the vulcanization of the cushion member, a strong and reliable connection between the cushion member and the support member is established, so that the friction reduction layer can be stably attached to the cushion member.

In a preferred embodiment, the support element is nest-shaped such that the support element at least partially surrounds the friction reduction layer.

This further optimizes the mechanical connection between the friction reduction layer and the cushion member.

In a preferred embodiment, the friction reduction layer is configured to positively engage or being positively engaged with the support element, preferably by means of a circumferential projection on a peripheral side of the friction conduction layer and a corresponding groove of the support element.

This further simplifies the manufacturing process of the bumper element. This design allows the friction reduction layer to be simply pressed into the support element after vulcanization of the support element and cushion member. Due to the form fit of the elements, they are permanently and tightly connected to each other.

In a preferred embodiment, the support element comprises (or consists of) polyamide.

Polyamide provides good chemical resistance, good processibility, strength, stiffness and toughness. In addition, it has a high abrasion resistance properties. Thus, mechanical properties of the bumper element are enhanced.

Moreover, the objective of the invention is also particularly solved by an air spring, in particular by a trailer air spring, comprising a bumper element according to the invention.

The advantages as described in connection with the bumper element according to the invention can also be achieved by the air spring. It should also be noted that the features described in the context of the bumper element also apply to the air spring.

Further, the objective of the invention is also particularly solved by the use of a layer of polytetrafluoroethylene on a bumper element to reduce friction between the bumper element and an end plate of an air spring, in particular of a trailer air spring.

The advantages as described in connection with the bumper element according to the invention can also be achieved by the use of polytetrafluoroethylene on a bumper element.

In the following, the invention is also described with respect to further details, features and advantages, which are explained in more detail with reference to the figures. The described features and combinations of features, as shown below in the figures and described with reference to the figures, are applicable not only in the respective combination indicated, but also in other combinations or in stand-alone manner, without thereby leaving the scope of the invention.
- FIG. 1A: shows a conventional air spring comprising a conventional bumper element in a pressurized condition;
- FIG. 1B: shows the conventional air spring of FIG. 1A in a depressurized condition;
- FIG. 2: shows an embodiment of the bumper element according to the invention with a friction reduction layer;
- FIG. 3: shows a detailed view of an embodiment of the bumper element according to the invention;
- FIG. 4: shows an embodiment of the air spring according to the invention.

The figures are of a schematic nature only and are intended solely for the purpose of understanding the invention. Similar elements are provided with the same reference signs in the description of the examples of the embodiments.

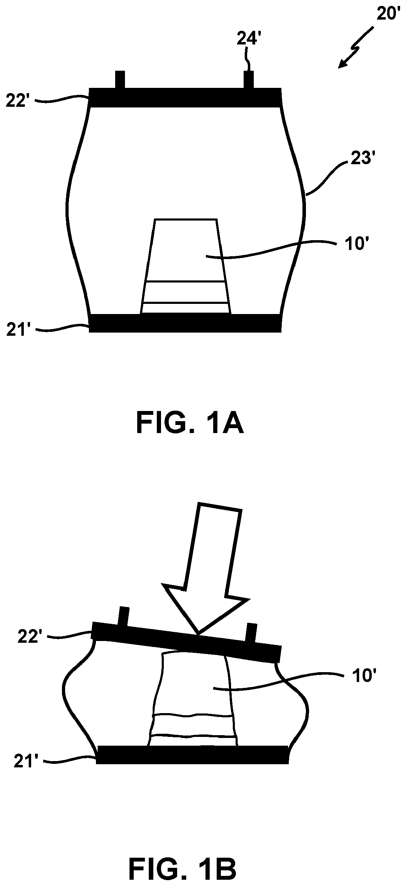

FIGs 1A and 1B refer to a conventional air spring 20' as described in the introduction. The air spring 20' comprises a lower end plate 21' and an upper end plate 22'. On the upper end plate 22', bolts with air fitting 24 are shown. The air is typically enclosed in a bellows 23, which is connected in an airtight manner to the upper 22' and lower end plate 21'. Inside the volume of the bellows 23', a conventional bumper element 10' is provided on the lower end plate 21'.

The bumper element 10' should protect the suspension parts from damage, when a vehicle (not shown) or the air spring 20' is depressurized or in case the air spring 20' is not working.

Typically, the upper end plate 22' is made of metal, such as (forged) steel, cast zinc alloy or cast aluminum. Further, usually, the bumper element 10' is made of rubber.

In case, when the conventional air spring 20' is depressurized or not working properly, the upper end plate 22' will usually come into contact with the bumper element 10' (see FIG. 1B).

However, on the depressurized air spring 20' large stress can be present, since, e.g., in a harbour operation, when a truck uncouples its trailer and pushes the trailer onto the ship, the trailer's air springs are no longer supplied with compressed air, but the load of the trailer remains on the air spring.

Due to the high friction between the metal upper end plate 22' and the rubber bumper element 10', the bumper element 10' and the metal upper end plate 22' may stick together and all forces acting on the upper plate 22' are transmitted directly to the bumper element 10'.

This may lead to the total damage of the bumper element 10'.

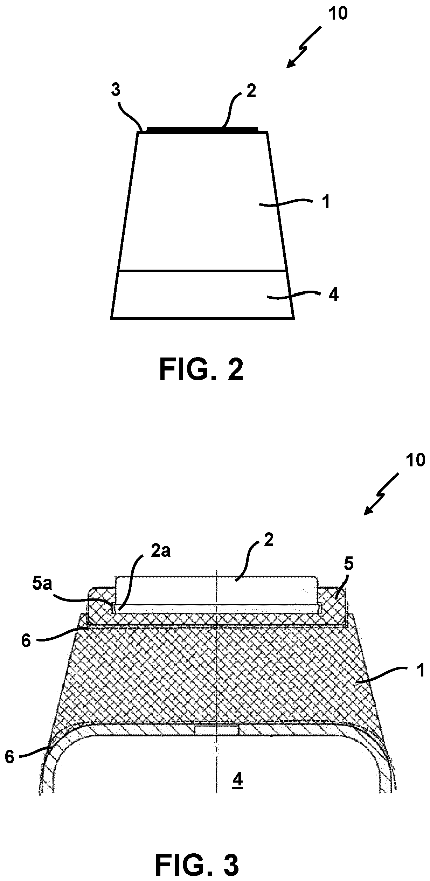

In order to overcome such damage to bumper elements, a friction reduction layer 2, is provided a bumper element 10 according to the invention - see FIG. 2.

The bumper element 10 comprises a cushion member 1 that provides buffer protection for the above-described case, when the air spring is not working properly or is depressurized. In a preferred embodiment, the cushion member 1 comprises or consists of rubber.

In the embodiment according to FIG. 2, a friction reduction layer 2 is provided on a top portion 3 of the cushion member 1.

In the shown embodiment, an end closure element 4 is provided on a bottom portion of the cushion member 1. The end closure 4 may be made of metal or of another material and may be used to mount the bumper element 10 on an end plate of an air spring.

In alternative embodiments, the end closure element 4 may also be omitted and the bumper element 10 and the corresponding end plate 21 may be connected in a different manner. For example, it is possible to connect the rubber to the metal of an end plate by heating (vulcanization), preferably by using an undercoating.

In a preferred embodiment, the friction reduction layer 2 is a polytetrafluoroethylene (Teflon) layer 2, which is applied to the top portion 3 of the cushion member 1 (consisting of rubber).

Preferably, the cushion member 1 is a rubber cushion member 1 and the friction reduction layer 2 is assembled to the top portion 3 of the cushion member 1.

The assembly between the friction reduction layer 2 and the cushion member 1 may be realized or supported by means of a support element 5 (FIG. 3).

Preferably, the support element 5 at least partially surrounds the friction reduction layer 2 in order to optimize the extension of the polytetrafluoroethylene layer 2, during work loads.

In the shown example of FIG. 3, the polytetrafluoroethylene layer 2 has a height of approximately 10 mm. The support element 5 may be a polyamide nest element that (at least partially surrounds) surrounds the friction reduction layer 2. The height of the support element 5 may be approximately the same as the height of the friction reduction layer 2.

In the shown example of the bumper element 10 according to FIG. 3, the friction reduction layer 2 is positively engaged with the support element 5.

The positive engagement is preferably realized by means of a circumferential projection 2a on a peripheral side of the friction conduction layer 2 and a corresponding groove 5a of the support element 5.

For example, the projection 2a may be configured as a circumferential ring of the friction reduction layer 2.

In the following, an example of the manufacturing process of a bumper element 10, is given with respect to FIG. 3

In a first step, a metal end closure element 4 and a polyamide support element 5 are coated with respective bonding agent coatings 6, which preferably provide a perfect adhesion between the rubber cushion member 1 and metal/polyamide.

Afterwards, in a second step, the end closure element 4 and the support element 5 are being treated in a vulcanization tool.

After vulcanization, the metal end closure element 4, the support element 5 and the (vulcanized rubber) cushion member 1 are connected together to a single element.

In a third step, the friction reduction layer 2 is assembled to the support element 5 in order to obtain a bumper element 10.

For this purpose, the friction reduction layer 2 is simply pushed into the support element 5.

Due to the circumferential projection 2a of the friction reduction layer 2 and a corresponding groove 5a of the support element 5, the friction reduction layer 2 and the support element 5 are then permanently and tightly connected to each other.

In a variation of the above described manufacturing process of the bumper element 10, the end closure element 4 is omitted and only the cushion member 1 and the support element 5 are connected by vulcanization of the cushion member, and the friction reduction layer 2 is attached to the support element 5 afterwards, as described above.

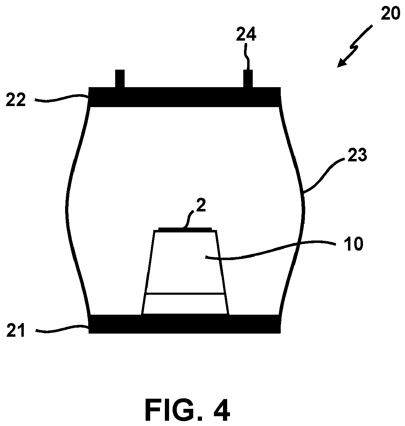

FIG. 4 shows an example of an air spring 20 according to the invention.

The air spring 20 as shown in FIG. 4 corresponds substantially to the structure of the conventional air spring 20' according to FIGs 1A and 1B, with the difference that the air spring 20 according to FIG. 4 comprises a bumper element 10 according to the invention.

The air spring 20 comprises a lower end plate 21 and an upper end plate 22.

The upper end 22 may comprise bolts with air fitting 24, to supply air to the volume enclosed by bellows 23, which is connected in an airtight manner to the upper 22 and lower end plate 21.

However, the air spring 20 according to the invention is not limited to the example as shown in FIG. 4.

The skilled person will recognize that the positions and types of air fittings 24 and/or those of the bellows 23 may differ from the arrangement shown in FIG. 4 without departing from the idea of the invention.

The lower end plate 21 and/or the upper end plate 22 of the air spring 20 may be made of metal, such as (forged) steel, cast zinc alloy or cast aluminum.

In FIG. 4, the bumper element 10 is mounted to the lower end plate 21. However, in alternative embodiments, it would also be possible to mount the bumper element 10 to the upper end plate 22.

In a case, where the air spring 20 is depressurized or not working properly, the upper end plate 22 may come into contact with the bumper element 10 (compare situation as shown in FIG. 1B).

However, the friction reduction layer 2 on the bumper element 10 prevents sticking between the upper end plate 22 and the bumper element 10.

When the upper end plate 22 (in physical contact with the bumper element 10) moves sideways (e.g. due to a corresponding truck/trailer movement), the upper end plate 22 can slide back and forth accordingly on the bumper element 10, due to the high sliding behavior of the friction reduction layer 2.

Thus, in the air spring 20 according to the invention, the bumper element 10 and the upper end plate 22 are prevented from sticking together. As a result, the bumper element 10 undergoes minimal lateral deformation and cannot be destroyed by a movement of the upper end plate 22, as in conventional air spring 20' (FIGs 1A and 1B).

### LIST OF REFERENCE SIGNS

- 1: (rubber) cushion member
- 2: friction reduction layer (polytetrafluoroethylene layer)
- 2a: contour profile
- 3: top portion of the cushion member
- 4: end closure element
- 5: support element
- 5a: groove
- 6: bonding agent coating
- 10: bumper element
- 20: air spring
- 21: lower end plate of the air spring
- 22: upper end plate of the air spring
- 23: bellows
- 24: bolt with air fitting

## Claims

1. Bumper element (10) for an air spring, in particular for a trailer air spring, mountable to an end plate of the air spring (20), in particular to a lower end plate (21) of the air spring (20), wherein the bumper element (10) comprises a cushion member (1), preferably a rubber cushion member (1),
**characterized in that**
the cushion member (1) comprises a friction reduction layer (2).

2. Bumper element (10) according to claim 1,
**characterized in that**
the friction reduction layer (2) is arranged on a top portion (3) of the cushion member (1), in particular such that when the bumper element (10) is mounted to the air spring, the top portion (3) faces an upper end plate (22) of the air spring (20).

3. Bumper element (10) according to one of claims 1 or 2,
**characterized in that**
the friction reduction layer (2) comprises polytetrafluoroethylene.

4. Bumper element (10) according to one of claims 1 to 3,
**characterized in that**
the friction reduction layer (1) has a thickness between 1 mm and 20 mm, preferably between 5 mm and 10 mm.

5. Bumper element (10) according to one of claims 1 to 4,
**characterized in that**
a connection between the friction reduction layer (2) and the cushion member (1) is realized or supported by means of a support element (5).

6. Bumper element (10) according to claim 5,
**characterized in that**
the support element (5) being vulcanized to the cushion member (1), preferably by means of a bonding agent coating (6).

7. Bumper element (10) according to claim 5 or 6,
**characterized in that**
the support element (5) is nest-shaped such that the support element (5) at least partially surrounds the friction reduction layer (2).

8. Bumper element (10) according to one of claims 5 to 7,
**characterized in that**
the friction reduction layer (2) is configured to positively engage or being positively engaged with the support element (5), preferably by means of a circumferential projection (2a) on a peripheral side of the friction conduction layer (2) and a corresponding groove (5a) of the support element (5).

9. Bumper element (10) according to one of claims 5 to 8,
**characterized in that**
the support element (5) comprises polyamide.

10. Air spring (20), in particular trailer air spring, comprising a bumper element (10) according to one of the preceding claims.

11. Use of a layer of polytetrafluoroethylene on a bumper element to reduce friction between the bumper element and an end plate of an air spring, in particular of a trailer air spring.
